# EUROPEAN PATENT APPLICATION

(11) **EP 3 075 346 A1**
(43) Date of publication of application: **05.10.2016**
(21) Application number: 15164568.6
(22) Date of filing: 22.04.2015
(51) Int. Cl.: A61C 8/00

(54) **DENTAL IMPLANT WITH IMPROVED STABILITY AND OSSEOINTEGRATION FEATURES**

(30) Priority: 30.03.2015 GR 20150100144
(71) Applicant: Kostakis, Georgios, 15125 Marousi (GR)
(72) Inventor: Kostakis, Georgios, 15125 Marousi (GR)
(74) Representative: Samuelides, Emmanuel

(57) **Abstract**

The invention relates to a dental implant having a body with attachment means **15** to attach the body to a bone, whereby the body comprises a wall **11** around a housing **12**, and the housing **12** has an open end to receive a prosthetic part **5**. The dental implant comprises at least one anchoring means **21** to anchor the dental implant to the bone, whereby the anchoring means **21** is located within a respective bore **31** provided through the wall of the implant. The anchoring means **21** that are distinct from the attachment means **15** penetrate and advance through the respective bore into the bone. With such implants, it is possible to obtain excellent stability of the dental implant in the early stage, after the embedding of the implant into the bone and before osseointegration, even under chewing loading with high impact forces.

## Description

The invention relates to the field of dental implants. The invention further relates to dental implants with improved stability and osseointegration features.

Dental implants are commonly used as anchoring members for dental restorations and are appropriate for carrying prosthetic teeth, such as crowns and dentures. Typically, known dental implant systems include a dental implant made from a suitable biocompatible material, for example titanium, an abutment and the prosthetic teeth or otherwise dental restoration.

The dental implant is fitted into a bore which is drilled into the patient's mandible or maxilla. Fitting of the dental implant into the bone may be effected by various appropriate ways, for example by a threaded connection or by pressing at the edentulous site. Once the known implant is fused into the bone, the process is referred as osseointegration, an abutment is fixed into the implant and subsequently the artificial prosthetic tooth is attached to the abutment.

The contact area between known implants and the bone should be sufficient to obtain adequate stability in the early stage after fitting of the implant as well as later when the abutment and the prosthetic part are attached to the implant. During the early stage after implantation, known implants exhibit low resistance to loads and the implant may dislocate under impact loading that is applied during normal chewing. Micro- mobility of approximately 150 nm, which may often occur, result in the failure of the embedding of the implant into the bone. In order to remedy such problems the abutment and the prosthetic part are attached to the implant two to eight months after the initial step. This period is needed for osseointegration, i.e. the fusion of the implant to the bone.

In order to achieve an adequate and appropriate connection of the bone and the dental implant before the implant is subjected to chewing loading, it is usual to conclude the fitting of the implant system in steps: in the initial or first step, a bore is drilled into the patient's mandible or maxilla and subsequently an implant is planted into the bore, for example by threading. As the body of the implant has a bore through it, the bore is covered with an appropriate temporary cover and the implant is left to be fused with the bone. In a second step, after a few weeks or months, the bore through the body of the dental implant is usually reopened and the abutment or the abutment and an artificial tooth are secured to the implant.

The invention relates to a dental implant having a body with attachment means to attach the body to a bone, whereby the body comprises a wall around a housing, and the housing has an open end to receive a prosthetic part.

An object of the present invention is a dental implant that addresses the problems of the known implants. A further object of the invention is a dental implant providing sufficient initial stability at the early stage after fitting the dental implant, i.e. before osseointegration is achieved.

A dental implant according to the invention further comprises at least one anchoring means to anchor the dental implant to the bone, whereby the anchoring means is located within a respective bore provided through the wall of the implant. The anchoring means that are distinct from the attachment means penetrate and advance through the respective bore into the bone.

With implants according to the invention, it is possible to obtain excellent stability of the dental implant in the early stage, after the embedding of the implant into the bone and before osseointegration, even under chewing loading with high impact forces. The implant with the anchoring means, which are distinct from the attachment means, exhibits sufficient resistance to the chewing forces that cause the failure of known implants, if loaded in the early stage. As a result, it is possible to attach the abutment and the prosthetic part at the early stages, without having to wait for osseointegration, which usually requires some time.

The anchoring means offer stability from the early stages and increase the lifetime of implants fitted in a bone compared to the lifetime offered by known implants. During fitting of the implant, the anchoring means penetrate the bores provided in wall of the body of the dental implant and advance into the bone to enhance the stability of the dental implant with the surrounding bone, as well as to increase the osseointegration of the implant. The abutment and the prosthetic part may be attached to the dental implant, after the implantation and before osseointegration. The implant with anchoring means take advantage of the three dimensions of the space and thus offer increased stability, even if the bone volume is not adequate for known implant placement

Preferably the attachment means is a thread at the outer surface of the body of the dental implant.

The body has an inner surface that surrounds and defines the housing. The housing is elongated and extends along a first longitudinal axis. Preferably, the inner surface of the wall has two portions: a first portion with an almost cylindrical surface and a second portion adjacent to the open end of the housing with a surface that is oblique with respect to the almost cylindrical surface. The second portion may be conical or almost conical.

Preferably, the anchoring means has thread means complementary to inner thread means of the bore, which locates them. The bore receiving the anchoring means may have stop means to restrict the movement of the anchoring means as it advances through it. The stop means may be an abutment means that cooperates with complementary means provided on the anchoring means. The bore may be almost symmetrical about a respective longitudinal axis that is disposed at an angle with respect to the first longitudinal axis. The angle between these two axes is preferably between 5 degrees and 80 degrees. The longitudinal axis of the bore intersects at right angle or at oblique angle the inner surface of the second portion of the housing. Preferably, the anchoring means has one end with drilling means to advance the said anchoring means within a bone.

The dental implant has one or more than one anchoring means. The anchoring means may be arranged regularly or irregularly around the wall of the body of the dental implant. Optionally each anchoring means has a thread to anchor the anchoring means to the bone. The anchoring means are made of osseointegrated materials or non-osseointegrated but biologically compatible materials.

Optional features that are related with further advantages of the invention are defined in the dependent claims. The dental implant according to the invention may comprise one or more of the optional features in combination.

Embodiments of the invention are described below with reference to **Figures 1 to 6****,** whereby:
**Figure 1** shows a perspective view of the body of the dental implant.
**Figures 2a, 2b and 2c** show a side view, a top view and a further side view of the body of the dental implant, respectively.
**Figure 3** shows a side section of the body of the dental implant with the anchoring screws.
**Figure 4** is a side section of the dental implant with the prosthetic part.
**Figure 5** is a bottom view of the dental implant.
**Figure 6** is a view of a further embodiment of the dental implant.
**Figure 7** shows a side section of the body of the dental implant with the anchoring screws of a further embodiment.
**Figure 8** is a side section of the dental implant of **Figure 7** with the prosthetic part.
**Figure 9** is a bottom view of the dental implant of a further embodiment.
**Figure 10** is a view of a further embodiment of the dental implant.

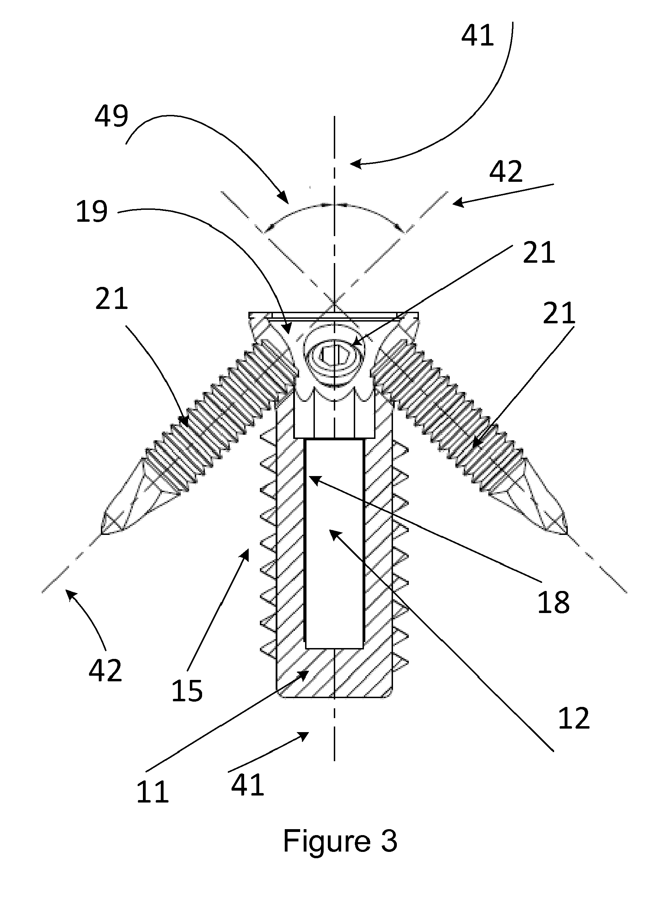

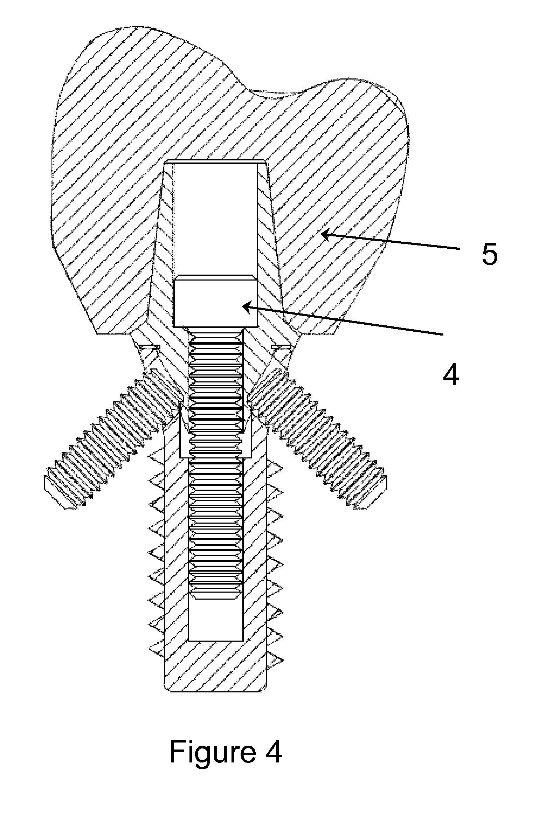

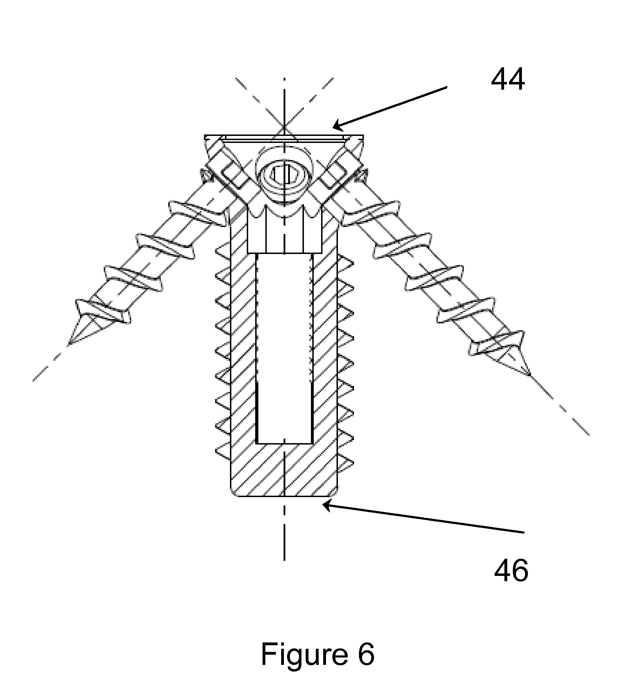

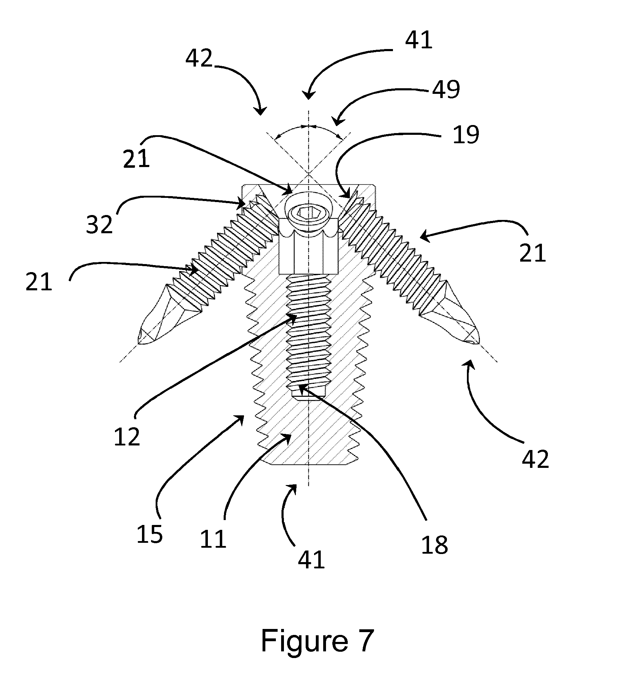

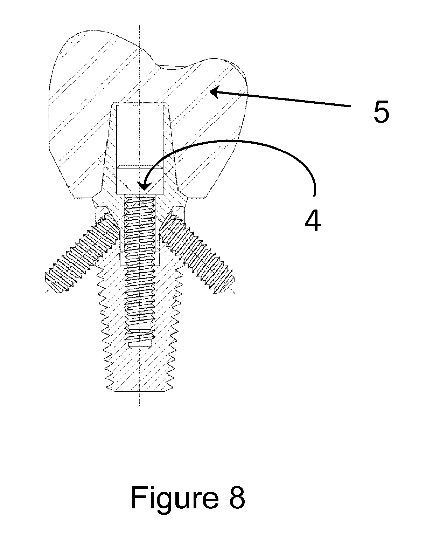

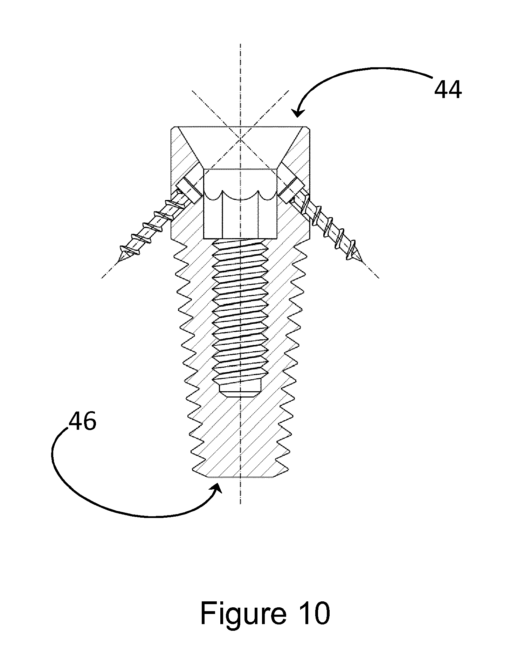

The dental implant has a body of biomaterial, preferably of titanium alloy. The body comprises a wall **11** defining a housing. In the embodiment presented in **Figures 3** **and** **7** the housing has the form of the elongated cavity **12.** The cavity **12** has an open end and a bottom end opposite the open end. The open end has a top edge **44** and the bottom end has a bottom face **46,** see **Figures 6** **and** **10****.** The open end of the cavity is configured to receive a shaft **4,** see **Figure 4** **and** **8****.** The shaft and the wall **11** have complementary means, for example complementary threads, that keep them attached to each other.

The cavity **12** extends along a first longitudinal axis **41** along the cavity **12** and defines a first longitudinal direction.

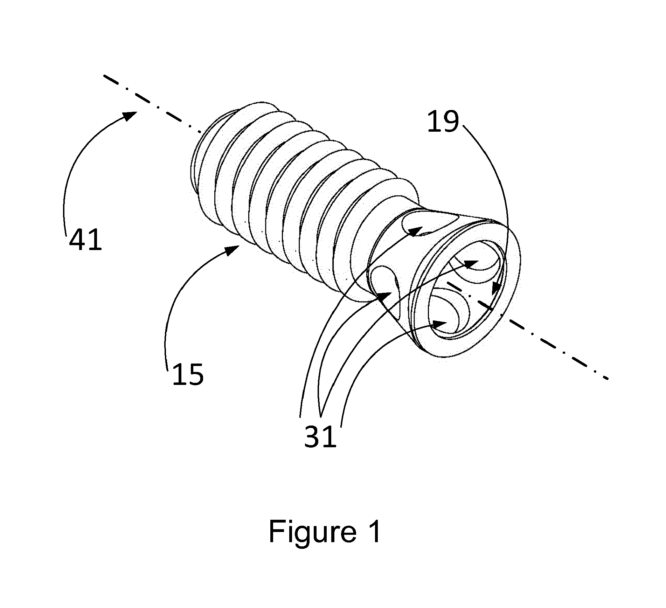

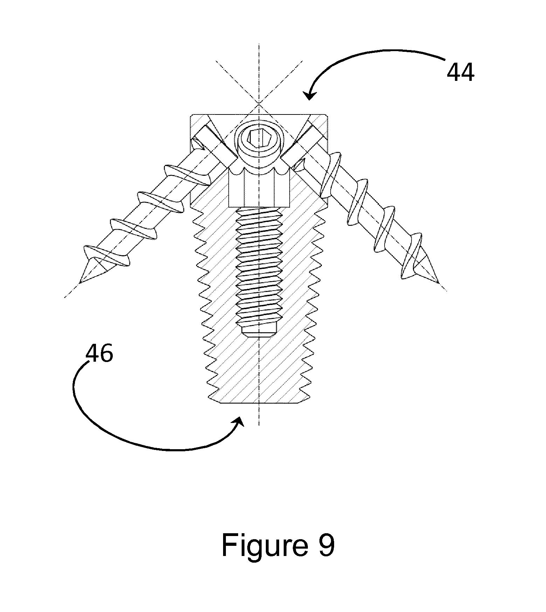

In the embodiment of **Figure 1** the body of the implant is hybrid with a lower almost cylindrical section and an upper almost conical section. Other shapes of the lower section and the upper section are also feasible. A typical diameter of the cylindrical section, i.e. the outer diameter of the body, is about 3.3 mm to about 6 mm. A typical height of the body, i.e. the distance between the top edge **44** and the bottom face **46,** is about 5 mm to about 15 mm to 20 mm. In the embodiments that are presented in **Figures 7 to 10****,** the lower section of the body of the implant is almost conical and the upper section of the body of the implant cylindrical or almost cylindrical.

The first longitudinal axis **41** and the axis of the cylindrical section of the body of the dental implant may or may not coincide, for example they may be arranged at a distance.

The wall **11** around the cavity **12** has an outer surface and an inner surface. The outer surface is provided with attachment means **15** to attach the body of the dental implant to a bone. The attachment means may be a thread **15,** but other means appropriate to attach the body to the bone may be used.

The inner surface of the wall **11,** which surrounds and defines the cavity **12** has two portions: a first portion **18,** which is a surface that could be cylindrical or almost cylindrical and extends to the lower part of the cavity, i.e. the part of the cavity that is towards the bottom end, and a second portion **19** adjacent to the open end of the cavity **12.** The first portion **18** corresponds to the cylindrical or almost cylindrical section of the body and the second portion **19** corresponds to the conical or almost conical section of the body, as for example it may be seen in the embodiment of **Figure 3****.**

The second portion **19** is oblique with respect to the almost cylindrical surface, i.e. the first portion **18.** In the embodiment of **Figure 1** the second portion **19** of the surface of the wall **11** is conical or almost conical with an apex angle of approximately 50 degrees. Preferably, the apex angle varies between 15 degrees and to 80 degrees.

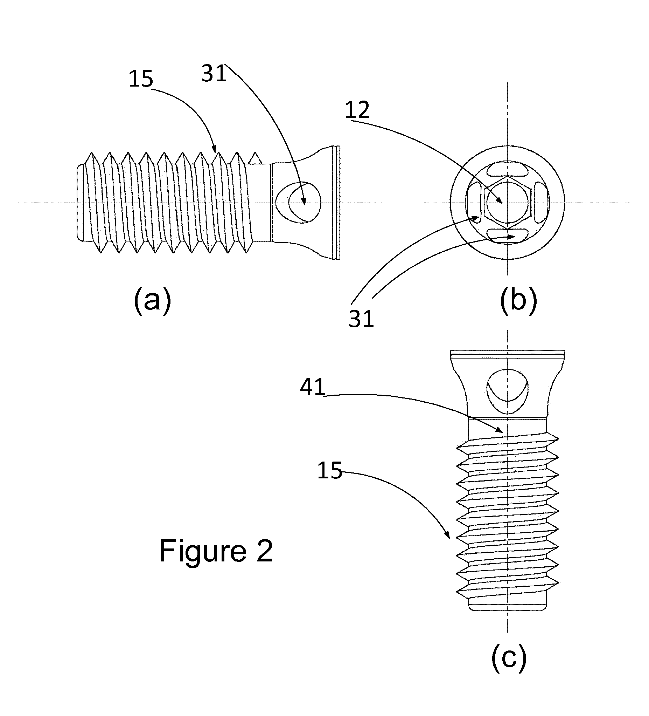

At the top of the body of the implant, in the area of the open end and the second portion of the inner surface **19,** there are bores **31,** configured to receive anchoring means **21,** projecting from the wall of the body of the implant towards the bone of the patient. **Figure 2** shows the arrangement of four bores **31** that are configured to receive respective anchoring means **21,** which in the preferred embodiments are screws from osseointergrated material or non-osseointegrated biologically compatible materials, for example screws from titanium alloy. The bores **31** and the respective anchoring means **21** are arranged symmetrically with respect to a plane that contains the first longitudinal axis **41.** Non symmetrical arrangements are also anticipated, in particular if non symmetrical arrangement of the bores **31** is suitable for the patient.

The anchoring means **21** are anchored into the patient's mandible or maxilla and offer increased osseointegration, and increase lifetime of the implant.

The bores **31** through the wall **11,** have an inner surface with an inner thread **32.** Each bore **31** receives a respective screw **21,** which has a complementary outer thread to the inner thread **32** of the bore **31.** During implantation, the screw **21** advances through the respective bore **31.** The advancement of the anchoring means may be done in two ways. One way is to screw the anchoring means directly through the bone. The second way, which we use in hard bones, is to use special drills to open the hole and then screw the anchoring means through the bone.

Bores **31** are almost cylindrical and each one has an axis **42.** Axes **42** are disposed at an angle **49** with respect to the first longitudinal axis **41.** The angle between the respective longitudinal axis **42** and the first longitudinal axis **41** is preferably between 10 degrees to 80 degrees. The axes **42** and the second portion of inner surface **19** may intersect at an oblique angle or at a right angle.

Each bore **31** has stop means to restrict the movement of the screw **21** through the bore.

The one end of each screw **21** may be fitted within the wall **11,** i.e. within the bore **31,** and the other end is anchored in the bone. The end anchored in the bone may have a conical shape to facilitate the advancement of the screw **21** within the bone. The end may be also equipped with drilling or grubbing means to further facilitate its advancement.

The bores **31** have a diameter of about 0.6 mm to about 4 mm. The screws **21** have a length of about 4 mm to about 15 mm.

Preferably, the screws **21** have an end or head with Torx^{™} type formation or Allen type formation. A locking mechanism, for example a snap mechanism not shown in the **Figures,** provided in the vicinity of each bores **31** secures the respective screw from loosening.

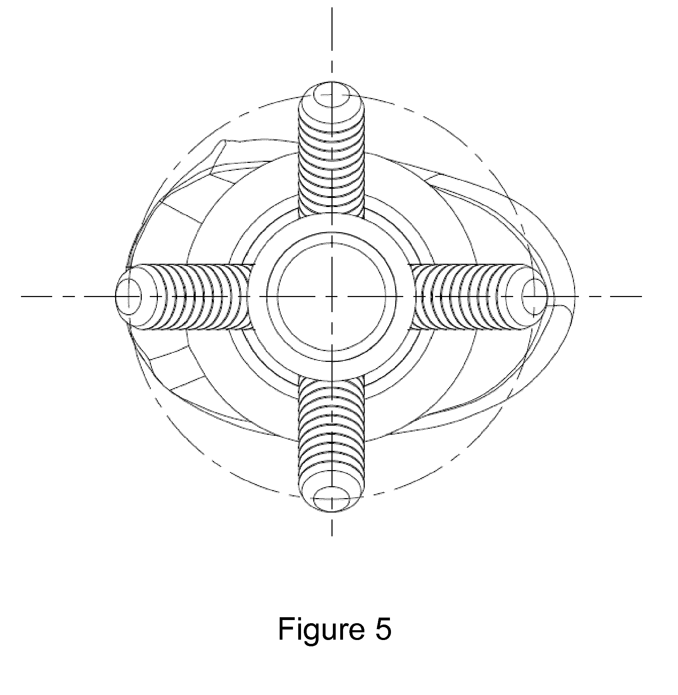

The number of the bores and the respective screws shown in the embodiment of **Figures 1 to 9** is four. However, it is possible to have an implant according to the invention with another number of screws, for example one, two as shown in **Figure 10****,** three or more than four. The arrangement of the bores along the periphery of the wall of the dental implant may be according to the needs of the patient and the morphology of the patient's mandible or maxilla. They may be arranged regularly and uniformly, i.e. being equally spaced, or they may be arranged irregularly. Preferably the dental implant has two anchoring means, because they provide adequate stability and they are fitted easily.

It is noted that the dimensions and angles that refer to the implant may vary within a range defined by deviations in the industrial manufacturing process. The examples presented are merely embodiments of the invention and do not limit the scope of protection, which is defined in the claims.

## Claims

1. Dental implant having a body with attachment means **(15)** to attach the body to a bone, whereby the body comprises a wall **(11)** around a housing **(12),** and the housing **(12)** has an open end to receive a prosthetic part **(5) characterized in that** the dental implant further comprises at least one anchoring means **(21),** other than the attachment means **(15),** to anchor the dental implant to the bone, whereby the anchoring means **(21)** is located within a respective bore **(31)** provided through the wall **(11)** of the implant and the anchoring means is configured to penetrate and advance through the respective bore into the bone

2. Dental implant **according to claim 1,** whereby the housing **(12)** is elongated about a first longitudinal axis **(41)** extended along the housing **(12),** the wall **(11)** has an inner surface that defines the housing **(12)** and the inner surface of the wall **(11)** has two portions: a first portion **(18)** and a second portion **(19)** adjacent to the open end of the housing **(12),** the second portion **(19)** being oblique with respect to the first portion **(18).**

3. Dental implant **according to claim 2,** whereby the first portion **(18)** is almost cylindrical and the second portion **(19)** is almost conical.

4. Dental implant **according to any one of claims 1 to 3,** whereby the bore **(31)** has an inner surface with inner thread means **(32),** and the anchoring means **(21)** has thread means complementary to the inner thread means **(32)** of the bore **(31),** which locates it.

5. Dental implant **according to any one of claims 1 to 4,** whereby the bore **(31)** has stop means to restrict the movement of the anchoring means **(21)** through the bore **(31),** which locates it.

6. Dental implant **according to claims 5,** whereby the stop means is located within the bore **(31).**

7. Dental implant **according to any one of claims 2 to 6,** whereby the bore **(31)** is almost symmetrical about a respective longitudinal axis **(42),** being disposed at an angle with respect to the first longitudinal axis **(41),** the angle between the respective longitudinal axis and the first axis being in the range from 5 to 80 degrees.

8. Dental implant **according to claim 7,** whereby the respective longitudinal axis **(42)** is normal to the second portion **(19)** of the inner surface of the housing **(12).**

9. Dental implant **according to claim 7,** whereby the respective longitudinal axis **(42)** is oblique to the inner surface of the second portion **(19)** of the housing **(12).**

10. Dental implant **according to any one of claims 1 to 9,** whereby the anchoring means **(21)** has one end with drilling means to advance the said anchoring means **(21)** within a bone.

11. Dental implant **according to any one of claims 1 to 10,** whereby the attachment means **(15)** is a thread means.

12. Dental implant **according to any one of claims 1 to 11,** whereby the dental implant has more than one anchoring means **(21).**

13. Dental implant **according to claim 12,** whereby the anchoring means **(21)** are arranged regularly or irregularly around the wall **(11)** of the body of the dental implant.

14. Dental implant **according to any one of claims 1 to 13,** whereby each anchoring means **(21)** has a thread to anchor the anchoring means to the bone.

15. Dental implant **according to any one of claims 1 to 14,** whereby the anchoring means are made of osseointegrated materials or non-osseointegrated but biologically compatible materials.
